# EUROPEAN PATENT APPLICATION

(11) **EP 2 575 379 A1**
(43) Date of publication of application: **03.04.2013**
(21) Application number: 11306243.4
(22) Date of filing: 29.09.2011
(51) Int. Cl.: H04W 4/00, H04L 29/08

(54) **Apparatuses and computer program products for discovering and accessing local services via WiFi hotspots**

(71) Applicant: Alcatel Lucent, 75007 Paris (FR)
(72) Inventor: Vanderhulst, Geert, 2018 ANTWERP (DE)
(74) Representative: Sciaux, Edmond

(57) **Abstract**

A local service manager (LSM) for discovering and accessing local services via hotspots (HS1, ...) of a wireless network, comprises:
- means for registering (1) an account created by a service provider (SP), for a new hotspot (HS1) providing at least one service;
- means for registering (1) a service profile corresponding to a registered hotspot, which describes all the services the hotspot provides;
- means for downloading (3) a user application (UA) to the terminal (T) of a service consumer (SC);
- means for receiving (6) a request message from the user application (UA) run in the terminal of a service consumer (SC), this message containing the identifier of a hotspot, and requesting to retrieve the service profile corresponding to this identifier;
- means for looking up (6) the requested service profile;
- and means for responding (6) to the terminal (T) of a service consumer (SC) by sending a message containing the service profile corresponding to this identifier.

## Description

### BACKGROUND OF THE INVENTION

### Field of the invention

The present invention generally relates to a terminal and a manager for discovering and accessing local services delivered via base stations of a wireless local area network, such as so-called WiFi hotspots. In the following, we will call "local services" services that are accessible at a specific spot or region. The user terminal may be a personal computer, a smartphone, etc.

Finding services in public environments substantially differs from finding services in a private local network (e.g. a home network). Discovery protocols require a user terminal to be connected to a network to find services. Out in the city, one cannot try to connect to every WiFi hotspot to find out which local services are available. To unleash the full potential of local services, it should be possible to discover them on the spot, and gain access to a user interface to interact with a service from a user terminal. However, there is still no agreement on a solution that dictates how local services need to be advertised by service providers, and discovered by the terminals of service consumers.

### Description of the prior art

Software that manages wireless network connections for a terminal typically presents all nearby WiFi hotspots on the terminal. It remembers to which hotspots the user has previously connected and can automatically establish a connection to a trusted hotspot. Once a network connection has been set up, discovery protocols such as UPnP (Universal Plug and Play) or Bonjour (by Apple) are used to locate services on the network.

For example, the UPnP architecture supports zero-configuration and automatic discovery whereby a device can:
- Dynamically join a network
- Obtain an IP address
- Announce its name
- Convey its capabilities upon request
- Learn about the presence and capabilities of other devices

Using UPnP or Bonjour, one can discover available print services on a network, for instance. However, these discovery protocols assume that users are aware of the network they need to connect to in order to find and access a particular service (i.e. users need to know a near hotspot that provides a wanted service). This information is not always known in advance. In particular in crowded city environments, the list of available WiFi hotspots can grow large and users are not aware of which hotspots provide access to which services. This is also related to the fact that the user is not accurately aware of his/her current position with respect to the discovered hotspots.

Thus, there is a need to provide a technical solution such that a user terminal can automatically find out which hotspots deliver which services, even without the need to be aware of the user's current position.

This can be solved by applying, the manager and the terminal according to the invention.

### SUMMARY OF THE INVENTION

A first object of the invention is a manager for discovering and accessing local services via hotspots of a wireless network, characterized in that it comprises:
- means for registering an account created by a service provider, for a new hotspot providing at least one service;
- means for registering a service profile corresponding to a registered hotspot, which describes all the services the hotspot provides;
- means for downloading a user application to the terminal of a service consumer;
- means for receiving a request message from the user application run in the terminal of a service consumer, this message containing the identifier of a hotspot, and requesting to retrieve the service profile corresponding to this identifier;
- means for looking up the requested service profile;
- and means for responding to the terminal of a service consumer by sending a message containing the service profile corresponding to this identifier.

Thanks to this manager, a user terminal can automatically find out which hotspots deliver which services because the user application can retrieve a service profile registered in this manager, for each hotspot, and this service profile describes all the services the hotspot provides.

A second object of the invention is a terminal for discovering and accessing local services
via WiFi hotspots of a wireless network, characterized in that it comprises:
- means for detecting hotspots that provide local services, and receiving service profile identifiers respectively corresponding to these hotspots;
- means for sending a request message to a local service manager, this message containing the received service profile identifiers, in order to retrieve service profiles;
- means for enabling a user to select a service among services listed in the retrieved service profiles;
- means for connecting to the hotspot providing the selected service, and requesting the selected service, via this hotspot.

This terminal can automatically find out which hotspots deliver which services because the means for receiving service profile identifiers and the means for sending a request message to a local service manager in order to retrieve service profiles enable a user to know the list of all the services provided by detected hotspots.

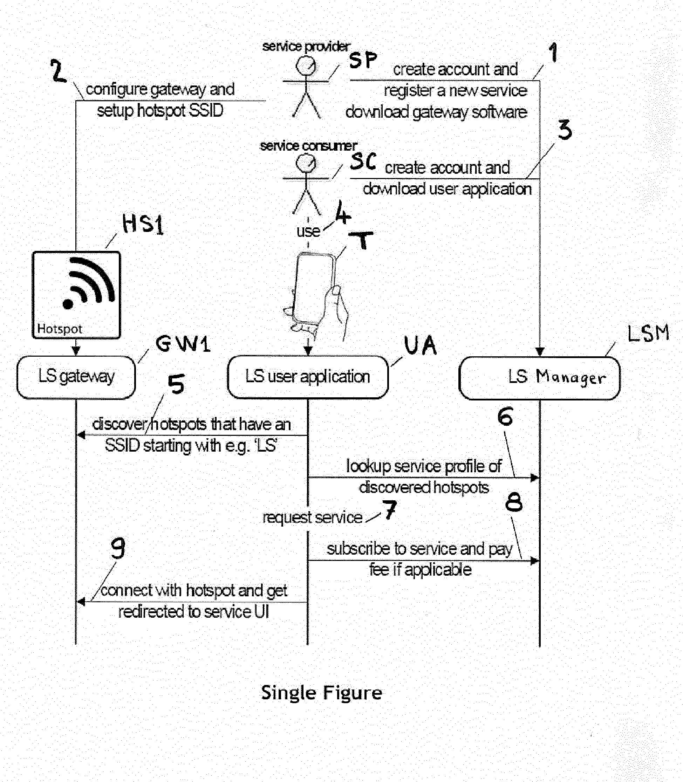

Other features and advantages of the present invention will become more apparent from the following detailed description of an embodiment of the present invention, when taken in conjunction with the accompanying drawing.

### BRIEF DESCRIPTION OF THE DRAWING

In order to illustrate in detail features and advantages of an embodiment of the present invention, the following description will be with reference to the accompanying single figure that shows a signaling flow in an embodiment in which a terminal discovers WiFi hotspots, looks up services profiles in a manager, subscribes to a particular service, and then connects to this particular service via an appropriate hotspot.

### DETAILED DESCRIPTION OF A PREFERRED EMBODIMENT

The embodiment represented on the figure comprises:
- A plurality of hotspots, for example the hotspot HS1. Each hotspot can provide a plurality of local services.
- A publicly accessible local service manager LSM that will be used by all the service providers and all the service consumers concerned by the plurality of hotspots HS1, etc. The manager LSM takes care of user management and maintains a repository of registered hotspots and their respective service profiles. Moreover, it regulates access to the gateways and handles the payment of service subscriptions. It runs a website that acts as a user interface. It provides service providers with functions to register new hotspots and new services. It provides service consumers with functions to create user accounts, and to subscribe to services.
- A plurality of local service gateways. Each service provider SP will use a gateway to deploy services on which can be connected to via one or more hotspots. Each one provides services that are proper to one or several associated hotspots. In this example, a local service gateway GW1 is associated to the hotspot HS1.
- A plurality of user terminals. For example, a user terminal T that is running a local service user application UA.

The use of this local service platform comprises the following steps:
**Step 1**: A service provider SP signs up and creates an account on the local service manager LSM. With an account, the service provider SP can register a new hotspot, and then register one or several services provided by this registered hotspot, for instance HS1. For each registered hotspot, the service supplier SP creates and registers a service profile which describes each service the hotspot provides (i.e. name of the service, image, location, ...) and its subscription policy. This policy can be "open to all" (free of charge) or indicate a subscription fee. For each registered hotspot, a unique profile identifier is generated by the manager LSM, and is associated to the hotspot's service profile.
   Each profile has a profile identifier. For instance "123" is the identifier assigned to the profile describing the services that will be provided by the hotspot HS1. The service provider SP assigns a SSID (Service Set Identifier) to each registered hotspot. According to the WiFi specification IEEE 802.11, the SSID is the name by which a WiFi network is advertised. According to the invention, a WiFi hotspot advertises services and enables connecting to them because the SSID is composed of a fixed pattern (e.g. "LS:") indicating that the hotspot provides local services, and of the profile identifier of the hotspot. For example, the SSID of the hotspot HS1 is "LS:123", wherein ":" is an arbitrary delimiter; the letters "LS" indicate that the hotspot is part of the local service network; and the number "123" is the identifier of the hotspot's service profile residing on the local service manager LSM.
   Since the service provider SP will deliver services installed on the local service gateway GW1, associated to the hotspot HS1, the local service manager LSM provides the service provider SP with instructions on how services need to be developed and deployed in this gateway GW1. Besides, an execution environment is required that runs the services and makes them available on the network. Hence, to transform a computing system into a gateway GW1 that can host services, software (i.e. an execution environment and a software development kit for developing services) is needed. The service provider SP can download this software from the manager LSM via the Internet. In other embodiments, it could be downloaded from another web site.
**Step 2**: Then the service provider SP configures the local service gateway GW1 so that it can provide the particular services that have been listed in the service profile. It sets up the SSID of the hotspot HS1 as "LS:123".
**Step 3:** A service consumer SC creates an account on the local service manager LSM, and downloads a local service application UA to be run on his/her terminal T. The service consumer CS can then subscribe to registered services. If payment is required, it is handled by the local service manager LSM.
**Step 4:** The user runs the application UA in order to discover all the services that have been registered on the local service manager LSM.
**Step 5:** The user application UA makes use of the WiFi chip of the terminal T to discover available hotspots with an SSID that comprises the predefined pattern "LS" indicating that it provides local services. It discovers a plurality of hotspots HS1, etc, that provide local services. For instance, hotspot HS1 is found because its SSID is "LS:123". The user application UA extracts the service profile identifier for each hotspot that provides services. In particular, it extracts the profile identifier "123" from the SSID of the hotspot HS1.
**Step 6:** Then the user application UA connects with the local service manager LSM (e.g. over GPRS network) to collect information about the services available on all the discovered hotspots. For instance, the profile identifier "123" is used as a reference to retrieve the service profile corresponding to the hotspot HS1. The contents of all the profiles respectively corresponding to all the hotspots providing local services are sent to the terminal T and are displayed for the user (i.e. the name, image, vendor, description, subscription indication ... of each related service is presented to the user).
**Step 7:** For instance, the user wants to use one of the services proposed by the hotspot HS1. He selects a service in the displayed list. The user application UA sends a request message to the manager LSM. This message contains the profile identifier "123" of the selected hotspot HS1, and the name of the selected service.
**Step 8**: If the requested service implies a subscription and paying a fee, the manager LSM advises the user. Then the user activates the application UA to send a message to the manager LSM, in order to subscribe to the requested service and to pay the corresponding fee.
**Step 9**: Then the application UA connects the terminal T with the hotspot HS1. The application UA loads a web browser and navigates it to the gateway GW1. The gateway GW1 serves a small web application that provides access to services in the local network. The user application sends a request message to the gateway GW1 in order to access the selected service, this message containing the name of the service. The gateway GW1 verifies whether this user is hallowed to access the service (i.e. the service is open to all, or the user must have a valid subscription), e.g. by interrogating the local service manager LSM. If the user is authenticated and hallowed, the gateway GW1 redirects the user service request to a user interface for the service.

The user application UA must be able to detect fake WiFi hotspots that use the same SSID as a registered hotspot. The gateway GW1 must also be able to authenticate users, i.e. decide whether a user is hallowed to access a service. Many algorithms are known for fulfilling these tasks. Some of them are described in [*Computer Networks,* Andrew S. Tanenbaum] and [*Distributed Systems: Concepts and Design,* George Coulouris, Jean Dollimore, Tim Kindberg]. It does not really matter how the security parts are realized. For instance, the user application UA exchanges security tokens with the gateway GW1 and the local service manager LSM. Authentication tokens to connect to a hotspot (such as WEP or WPA keys) could be stored on the manager LSM, along with a hotspot's service profile.

Several hotspots with the same SSID could be used to extend the range of a registered hotspot or to cover different places that provide the same service.

Several payment options could be provided (using credit card, or through SMS, ...) and for different periods (one session, one week, one month, ...).

For instance, the manager and terminal according to the invention can be used by a store where customers are provided with a service that highlights current promotions. The owner of the store uses the local service platform to register his service and receives LS gateway GW1 software and an SSID to configure the hotspot with. Optionally, an out-of-the box product could be provided on which the service can be deployed. When a user enters the store, the software on his user device automatically discovers the hotspot (even though several other hotspots are within reach in the store) and presents the promotion service to the user (information about this service is fetched from the LS manager). Since the service is provided free of charge, the user can connect with it and check out today's special promotions on his user device.

The manager and terminal according to the invention can also be used by a vendor of large displays for playing collaborative games in public spaces. The vendor registers a gaming service on the local service platform and charges a fee for it. A gateway and a hotspot regulate access to the gaming service and the user application discovers it when passing by the display. Using this application, the user can directly subscribe to the game service. Payment is handled by the local service manager. Once subscribed, a connection with the service's WiFi hotspot is established and the gateway redirects the user device, after authentication, to input controls to participate in the game.

## Claims

1. A manager (LSM) for discovering and accessing local services via hotspots (HS1, ...) of a wireless network, **characterized in that** it comprises:
- means for registering (1) an account created by a service provider (SP), for a new hotspot (HS1) providing at least one service;
- means for registering (1) a service profile corresponding to a registered hotspot, which describes all the services the hotspot provides;
- means for downloading (3) a user application (UA) to the terminal (T) of a service consumer;
- means for receiving (6) a request message from the user application (UA) run in the terminal (T) of a service consumer (SC), this message containing the identifier of a hotspot, and requesting to retrieve the service profile corresponding to this identifier;
- means for looking up (6) the requested service profile;
- and means for responding (6) to the terminal (T) of a service consumer (SC) by sending a message containing the service profile corresponding to this identifier.

2. A manager (LSM) according to claim 1, **characterized in that** it further comprises:
- means for registering (3) a subscription account created by a service consumer (SC) for at least one service;
- and means for receiving the payment of a fee for each service that must be paid.

3. A manager (LSM) according to claim 1, **characterized in that** it further comprises means for downloading (1) software that can be used by a service provider (SP) to transform a computing system into a gateway (GW1) that can host a service.

4. A manager (LSM) according to claim 1, **characterized in that** it further comprises means for creating and registering (1) an identifier associated to a registered hotspot, comprising a fixed pattern meaning that this hotspot provides local services, and comprising the identifier of the service profile corresponding to this hotspot.

5. A terminal (T) for discovering and accessing local services via WiFi hotspots (HS1, ...) of a wireless network, **characterized in that** it comprises:
- means (UA) for detecting (5) hotspots that provide local services, and receiving service profile identifiers respectively corresponding to these hotspots;
- means (UA) for sending (6) a request message to a local service manager (LSM), this message containing the received service profile identifiers, in order to retrieve service profiles;
- means (UA) for enabling a user to select a service among services listed in the retrieved service profiles;
- means (UA) for connecting to the hotspot providing the selected service, and requesting the selected service, via this hotspot.

6. A terminal (T) according to claim 1, **characterized in that** it further comprises:
- means for subscribing (8) to a service;
- and means for paying (8) a fee for each service that must be paid.

7. A terminal (T) according to claim 1, **characterized in that** means (UA) for detecting (5) hotspots that provide local services comprise means for detecting a hotspot identifier comprising a peculiar pattern indicating that this hotspot provides local services, and then extracting a service profile identifier from this hotspot identifier.

8. A computer program product comprising computer-executable instructions for performing a method when the program is run on a computer, the method comprising the steps of:
- registering (1) an account created by a service provider (SP), for a new hotspot (HS1) providing at least one service;
- registering (1) an account created by a service provider (SP), for a new hotspot (HS1) providing at least one service;
- registering (1) a service profile corresponding to a registered hotspot, which describes all the services the hotspot provides;
- downloading (3) a user application (UA) to the terminal (T) of a service consumer (SC);
- receiving (6) a request message from the user application (UA) run in the terminal (T) of a service consumer (SC), this message containing the identifier of a hotspot, and requesting to retrieve the service profile corresponding to this identifier;
- looking up (6) the requested service profile;
- and responding (6) to the terminal (T) of a service consumer (SC) by sending a message containing the service profile corresponding to this identifier.

9. A computer program product according to claim 8 wherein the method further comprises the steps of:
- subscribing (8) to a service;
- and paying (8) a fee for each service that must be paid.

10. A computer program product according to claim 8 wherein the method further comprises the steps of downloading (1) software that can be used by a service provider (SP) to transform a computing system into a gateway (GW1) that can host a service.

11. A computer program product according to claim 8 further comprising the step of creating and registering (1) an identifier associated to a registered hotspot, comprising a fixed pattern meaning that this hotspot provides local services, and comprising the identifier of the service profile corresponding to this hotspot.

12. A computer program product comprising computer-executable instructions for performing a method when the program is run on a computer, the method comprising the steps of:
- detecting (5) hotspots that provide local services, and receiving service profile identifiers respectively corresponding to these hotspots;
- sending (6) a request message to a local service manager (LSM), this message containing the received service profile identifiers, in order to retrieve service profiles;
- enabling a user to select a service among services listed in the retrieved service profiles;
- connecting to the hotspot providing the selected service, and requesting the selected service, via this hotspot.

13. A computer program product according to claim 12, wherein the method further comprises the steps of subscribing (8) to a service; and paying (8) a fee for each service that is charged for.

14. A computer program product according to claim 12 wherein the step of detecting (5) hotspots that provide local services comprises the steps of detecting a hotspot identifier comprising a peculiar pattern indicating that this hotspot provides local services, and then extracting a service profile identifier from this hotspot identifier.

## Amended claims

### Amended claims in accordance with Rule 137(2) EPC.

**1.** A manager (LSM) for discovering and accessing local services via hotspots (HS1, ...) of a wireless network, comprising:
- means for registering (1) a service profile corresponding to a registered hotspot, which describes all the services the hotspot provides;
- means for receiving (6) a request message from the terminal (T) of a service consumer (SC), this message requesting to retrieve the service profile corresponding to a registered hotspot;
- means for looking up (6) the requested service profile;
- and means for responding (6) to the terminal (T) of a service consumer (SC) by sending a message containing the retrieved service profile;
**characterized in that**:
- said means for registering (1) a service profile corresponding to a registered hotspot comprise means for registering a plurality of service profiles respectively associated to a plurality of profile identifiers respectively corresponding to a plurality of registered hotspots (HS1, ...);
- said means for receiving (6) a request message from the terminal (T) of a service consumer (SC), comprise means for extracting from this message a profile identifier, and then retrieving a registered service profile corresponding to the extracted profile identifier.

**2.** A manager (LSM) according to claim 1, **characterized in that** it further comprises:
- means for registering (3) a subscription account created by a service consumer (SC) for at least one service;
- and means for receiving the payment of a fee for each service that must be paid.

**3.** A manager (LSM) according to claim 1, **characterized in that** it further comprises:
- means for registering (1) an account created by a service provider (SP), for a new hotspot (HS1) providing at least one service;
- and means for downloading (1) software that can be used by a service provider (SP) to transform a computing system into a gateway (GW1) that can host a service.

**4.** A manager (LSM) according to claim 1; **characterized in that** it further comprises means for creating and registering (1) an identifier associated to a registered hotspot, comprising a fixed pattern meaning that this hotspot provides local services, and comprising the profile identifier of the service profile corresponding to this hotspot.

**5.** A terminal (T) for discovering and accessing local services via WiFi hotspots (HS1, ...) of a wireless network, comprising:
- means (UA) for detecting (5) a hotspot and for sending (6) a request message to a local service manager (LSM), in order to retrieve a service profile corresponding to a detected hotspot, and describing all the services the hotspot provides;
- means (UA) for receiving a service profile and enabling a user to select a service among services listed in the received service profile;
- means (UA) for connecting to the hotspot providing the selected service, and requesting the selected service, via this hotspot;
**characterized in that** said means (UA) for detecting (5) a hotspot and for sending (6) a request message to a local service manager (LSM) comprise means for sending said request message to a local service manager (LSM) via another wireless network.

**6.** A terminal (T) according to claim 1, **characterized in that** it further comprises:
- means for subscribing (8) to a service;
- and means for paying (8) a fee for each service that must be paid.

**7.** A terminal (T) according to claim 1, **characterized in that** means (UA) for detecting (5) hotspots that provide local services comprise means for detecting a hotspot identifier comprising a peculiar pattern indicating that this hotspot provides local services, and then extracting a service profile identifier from this hotspot identifier.

**8.** A computer program product comprising computer-executable instructions for performing a method when the program is run on a computer, the method comprising the steps of:
- registering (1) a service profile corresponding to a registered hotspot, which describes all the services the hotspot provides;
- receiving (6) a request message from the a terminal (T) of a service consumer (SC), this message requesting to retrieve the service profile corresponding to a registered hotspot;
- looking up (6) the requested service profile;
- and responding (6) to the terminal (T) of a service consumer (SC) by sending a message containing the service profile corresponding to this registered hotspot;
**characterized in that**:
- registering (1) a service profile corresponding to a registered hotspot comprises the step of respectively associating this service profile to a profile identifier respectively corresponding to a registered hotspots (HS1,...);
- and receiving (6) a request message from the terminal (T) of a service consumer (SC), comprise the step of extracting from this message a profile identifier, and then retrieving a registered service profile corresponding to the extracted profile identifier.

**9.** A computer program product according to claim 8 wherein the method further comprises the steps of:
- subscribing (8) to a service;
- and paying (8) a fee for each service that must be paid.

**10.** A computer program product according to claim 8 wherein the method further comprises
- the step of registering (1) an account created by a service provider (SP), for a new hotspot (HS1) providing at least one service;
- and the the step of downloading (1) software that can be used by a service provider (SP) to transform a computing system into a gateway (GW1) that can host a service.

**11.** A computer program product according to claim 8 further comprising the step of creating and registering (1) an identifier associated to a registered hotspot, comprising a fixed pattern meaning that this hotspot provides local services, and comprising the identifier of the service profile corresponding to this hotspot.

**12.** A computer program product comprising computer-executable instructions for performing a method when the program is run on a computer, the method comprising the steps of:
- detecting (5) a hotspot and sending (6) a request message to a local service manager (LSM), in order to retrieve a service profile corresponding to a detected hotspot, and describing all the services the hotspot provides;
- receiving a service profile and enabling a user to select a service among services listed in the received service profile;
- connecting to the hotspot providing the selected service, and requesting the selected service, via this hotspot;
**characterized in that** said step of detecting (5) a hotspot and sending (6) a request message to a local service manager (LSM) comprises the step of sending said request message to a local service manager (LSM) via another wireless network.

**13.** A computer program product according to claim 12, wherein the method further comprises the steps of subscribing (8) to a service; and paying (8) a fee for each service that is charged for.

**14.** A computer program product according to claim 12 wherein the step of detecting (5) hotspots that provide local services comprises the steps of detecting a hotspot identifier comprising a peculiar pattern indicating that this hotspot provides local services, and then extracting a service profile identifier from this hotspot identifier.
